# FASCICULE DE BREVET EUROPEEN

(11) **EP 2 235 096 B1**
(45) Date de publication et mention de la délivrance du brevet: **26.10.2011**
(21) Numéro de dépôt: 09704184.2
(22) Date de dépôt: 23.01.2009
(51) Int. Cl.: C08J 9/00

(54) **COMPOSITIONS DE MOUSSE IGNIFUGE**
FLAMMWIDRIGE SCHAUMSTOFFZUSAMMENSETZUNGEN
FIREPROOF FOAM COMPOSITIONS

(30) Priorité: 25.01.2008 EP 08150689; 06.06.2008 EP 08157798
(43) Date de publication de la demande: 06.10.2010
(73) Titulaire: NMC S.A., 4731 Eynatten (BE)
(72) Inventeur: MAYERES, Jean-Pierre, B-4700 Eupen (BE); JOB, Denis, B-4031 Angleur (BE); BONNAUD, Leïla, F-59300 Valenciennes (FR); ALEXANDRE, Michaël, B-4101 Ougree (BE); DUBOIS, Philippe, B-4260 Braives (BE); LAOUTID, Fouad, F-59130 Lambersart (FR)
(74) Mandataire: Office Freylinger
(86) Numéro de dépôt international: PCT/EP2009/050768
(87) Numéro de publication internationale: WO 2009/092785

(56) Documents cités:
- EP-A- 0 672 510
- EP-A- 1 512 714
- WO-A-02/070595
- WO-A-2006/114495
- DE-A1- 19 649 279
- US-A- 4 086 192
- US-A1- 2003 213 939
- US-A1- 2006 183 835
- DATABASE WPI Week 199104 Thomson Scientific, London, GB; AN 1991-026357 XP002482833 -& JP 02 296841 A (FURUKAWA ELECTRIC CO LTD) 7 décembre 1990 (1990-12-07)
- DATABASE WPI Week 199628 Thomson Scientific, London, GB; AN 1996-272812 XP002482834 -& JP 08 113662 A (SEKISUI CHEM IND CO LTD) 7 mai 1996 (1996-05-07)
- DATABASE WPI Week 200443 Thomson Scientific, London, GB; AN 2004-453273 XP002482835 -& JP 2004 075707 A (SEKISUI CHEM IND CO LTD) 11 mars 2004 (2004-03-11)
- DATABASE WPI Week 200368 Thomson Scientific, London, GB; AN 2003-715824 XP002519529 & JP 2003 192817 A (SUZUKI SOGYO KK) 9 juillet 2003 (2003-07-09)
- DATABASE WPI Week 200378 Thomson Scientific, London, GB; AN 2003-836919 XP002519530 & JP 2003 191376 A (FURUKAWA ELECTRIC CO LTD) 8 juillet 2003 (2003-07-08)

## Description

### Domaine technique

La présente invention concerne des mousses polymères ignifuges ayant une résistance améliorée au feu, ainsi qu'un procédé de préparation de ces mousses et leur utilisation.

### Etat de la technique

L'utilisation d'agents retardateurs de feu ou agents ignifuges halogénés comme additifs est connue depuis longtemps, même en combinaison avec des agents synergistes, comme le trioxyde d'antimoine. Grâce à l'incorporation de ces agents halogénés, il est possible d'obtenir des performances ignifuges très intéressantes même à des concentrations relativement faibles en agent ignifuge de 2 à 15 % en poids. Ces teneurs réduites sont acceptables pour fabriquer les mousses basse densité (< 60 kg/m³) obtenues par injection directe de gaz en extrusion, comme p. ex. dans le cas des mousses à base de polyoléfines.

Néanmoins, vu les risques potentiels généralement associés à ces composés halogénés, les règlementations en cours d'élaboration font craindre une prochaine interdiction complète de ces composés halogénés. Le décabromo-diphényléther est un exemple actuel de discussion sur son potentiel de formation de dioxines toxiques.

Il est également connu d'ajouter d'autres agents ignifuges, notamment en complément ou en remplacement de ces composés halogénés, notamment à des polyoléfines afin d'augmenter leur résistance au feu. Les additifs classiquement utilisés sont p. ex. le trioxyde d'antimoine, le sulfate d'ammonium et le borax, ainsi que les hydroxydes métalliques.

Cependant, le fait de pouvoir utiliser des agents anti-feu dans les mousses polymères dépend très fortement de la quantité (concentration) et des caractéristiques de l'anti-feu (notamment le point de fusion et la granulométrie) qu'il faut utiliser pour obtenir une résistance au feu donnée (classement feu dans un test normé), qui elle-même est dépendante de la densité, de la nature chimique (polymère, réticulation ou non), et de l'épaisseur de la mousse. Le type et les caractéristiques du procédé d'obtention des mousses ont également une conséquence sur la teneur en anti-feu incorporable préservant la faisabilité et la qualité de la mousse. Par exemple, dans les procédés où l'on injecte le gaz dans l'équipement d'extrusion : lorsque l'anti-feu possède un point de fusion élevé par rapport aux températures de masse réalisées dans le procédé de moussage, il peut résulter que l'anti-feu ne fonde pas durant la transformation, ou bien fonde dans une première étape mais recristallise en fin de procédé à cause des températures plus basses généralement souhaitée à l'outillage de mise en forme pour occasionner le moussage (viscosité du polymère accrue donc meilleure stabilisation des bulles de gaz entourées de polymère). Ainsi, on observe qu'il est impossible de charger une mousse de faible densité (< 60 kg/m³) de polyoléfine, réticulée ou non, fabriquée selon le procédé par injection directe de gaz en extrusion, avec une quantité importante de particules de type minéral ou organique, ayant un point de fusion tel qu'elle est soit infusible, soit fusible mais cristallisant finalement durant la transformation. Ceci tient au fait que ces particules restant solides à l'issue de la transformation, elles ont une interaction avec l'agent de moussage lors de l'expansion à l'outil d'extrusion où la température est la plus basse, provoquant ainsi une profusion de cellules très fines. Cela peut d'une part réduire la capacité de moussage du mélange et/ou d'autre part entraîner la coalescence des cellules en des cavités et rendre la structure de la mousse hétérogène.

Comme exemples d'agents anti-feu non-halogénés minéraux ou organiques à haut point de fusion, on peut citer les tri-hydroxydes d'aluminium (300°C) et de magnésium (350°C) (relâchent de l'eau à plus haute température), le carbone graphite expansible, la mélamine cyanurate (350°C), etc. La granulométrie de ces particules est également un facteur important, de très grosses particules créant de grosses cellules. Bien que non-halogénés, les teneurs nécessaires avec ces produits sont très élevées, souvent de l'ordre de 25 à 60 % en poids de la composition non moussée. D'une manière générale, l'incorporation d'additifs interfère donc avec le moussage. Dans le cas de mousses réticulées expansées sans injection directe de gaz dans l'extrudeuse, on constitue un prémélange de polymères, d'additifs anti-feu et autres, d'agents chimiques d'expansion et de réticulation. On extrude ce prémélange en une matrice compacte, qui passe ensuite dans un four, provoquant ainsi la réticulation et puis la décomposition des agents chimiques en gaz. Il est connu que la présence d'une quantité importante d'additifs infusibles rend la préparation du mélange difficile, voire affecte l'homogénéité de l'expansion dans le four par manque d'homogénéité des additifs.

Chaque particule d'additif est un site potentiel pour la croissance d'une bulle de gaz, et on observe souvent une nucléation surabondante, ce qui nuit à la qualité de la mousse, surtout pour les mousses de très basses densités (de 10 à 25 kg/m³). De plus, chaque particule sertie dans les parois cellulaires, constitue un défaut potentiel de structure dommageable à l'intégrité de la paroi cellulaire et donc une source de rupture, provoquant alors des cellules ouvertes qui diminuent l'efficacité d'isolation de la mousse (transmission de la vapeur d'eau, de la chaleur).

Enfin, on connaît depuis 25 ans des particules de nature très différente, mais de granulométrie très réduite, appelées nanoparticules. Mais ce n'est que depuis dix ans que les études concernant l'utilisation de nanocomposites dans les systèmes retardateurs de flamme ont connu un essor considérable. Les nanocomposites suscitent un intérêt particulier pour deux raisons essentielles, d'une part ils peuvent générer des effets spécifiques (physiques ou chimiques) non observés dans les autres classes de systèmes anti-feu, d'autre part ils sont efficaces à des faibles taux d'incorporation (typiquement moins de 5% en masse).

L'amélioration de la stabilité thermique de polymères par incorporation de silicates lamellaires a été mise en évidence dès les années 1960 sur le PMMA. Des résultats similaires ont ensuite été observés sur d'autres polymères, tels que des polyimides ou des élastomères silicones. La température de dégradation de ces polymères est augmentée de plusieurs dizaines de degrés en présence des nanocharges.

Les silicates lamellaires modifient également de manière significative le comportement au feu des polymères. A partir des années 1990, le NIST (National Institute of Standards and Technology) a mené de nombreux travaux sur l'utilisation de montmorillonite et fluorhectorite dans différents polymères, tels que le PPgMA, le PS, le PA6, le PA12, les résines époxydes. Les teneurs utilisées restent toujours inférieures à 10% en masse. Ces travaux montrent que la présence de ces phyllosilicates entraîne une nette réduction du pic et de la valeur moyenne du flux de chaleur libérée lors de la combustion (HRR) mesurée au cône calorimètre.

Il apparaît que l'action des nanocomposites ne permet pas à elle seule d'assurer une résistance au feu efficace susceptible de franchir notamment les seuils normatifs. Beaucoup de travaux récents visent à associer les nanocomposites à d'autres systèmes retardateurs de flamme, tels que des composés phosphorés, des composés halogénés, des dérivés mélaminés et des nanotubes de carbone.

Les nanotubes de carbones ont été utilisés comme systèmes retardateurs de flamme dans différents polymères. Dans l'EVA, les résultats montrent qu'à des taux d'incorporation assez faibles (3 et 5%), les nanotubes conduisent à une réduction du pic de HRR de l'EVA mesuré au cône calorimètre, en favorisant le charbonnement du polymère. Les résultats sont meilleurs qu'avec des argiles modifiées. La combinaison des nanotubes de carbone et des argiles modifiées conduit à un effet de synergie qui serait à l'origine de la perfection de la surface du résidu formé.

La recherche d'une alternative aux produits halogénés pour l'amélioration du comportement au feu de polymères utilisés dans des mousses d'isolation peut conduire à de nombreuses solutions dont la viabilité est également liée à des éléments de coût ou d'aptitude à la transformation. Les performances les plus avantageuses sont obtenues pour des systèmes multicomposants dont la complexité des compositions se traduit par des mécanismes d'action également complexes.

L'utilisation de minéraux hydratés représente un inconvénient lié aux taux très élevés d'incorporation utilisés habituellement et qui n'est pas compatible avec le moussage d'un thermoplastique et avec une application d'isolation thermique.

Finalement, le dosage de ces produits, nécessaires à l'obtention d'une résistance au feu acceptable, affecte donc d'une manière générale les propriétés mécaniques du produit fini. En plus, vu leur concentration élevée, certains de ces additifs ignifuges risquent de migrer vers la surface du produit. Leur distribution homogène à l'intérieur du produit n'est donc plus assurée.

### Objet de l'invention

Un objet de la présente invention est de proposer une mousse polymère ne présentant pas ou dans une moindre mesure les inconvénients cités.

L'invention a également pour objet un procédé pour fabrication de mousses ignifuges et l'utilisation des mousses ainsi obtenues.

Conformément à l'invention, cet objectif est atteint par une mousse à base d'un mélange comprenant
a. une composition polymère comprenant un ou plusieurs homopolymères, copolymères statistiques ou copolymères séquencés, thermoplastiques et/ou élastomères, ou leurs mélanges, éventuellement réticulé(s),
b. de 0,05 à 10 % en poids du mélange de nanotubes de carbone, et
c. de 0,05 à 15 % en poids du mélange de phosphore rouge.

### Description générale de l'invention

Afin de résoudre le problème mentionné ci-dessus, la présente invention propose donc, pour améliorer le comportement anti-feu de mousses polymères, d'ajouter au polymère thermoplastique et/ou élastomère une quantité relativement faible de nanotubes de carbone et de phosphore rouge, tel qu'indiqué à la revendication 1.

En effet, une des possibilités d'obtenir un effet ignifuge est d'utiliser des produits capables de former une couche charbonnée ou vitrifiée isolante à la surface de la mousse.

Il a été constaté que la formation d'une telle couche peut être facilitée par l'incorporation de charges nanométriques, argiles et/ou nanotubes de carbone, qui seraient susceptibles de limiter les transferts des produits de décomposition du polymère aux premiers stades de la décomposition et d'induire par effet catalytique la formation d'un charbonnement. Il a en outre été observé que cet effet peut être avantageusement combiné avec celui de certains additifs phosphorés.

Par conséquent, grâce à la combinaison des agents ignifuges à base de nanotubes de carbone et de phosphore rouge, on obtient des mousses polymères ayant des caractéristiques anti-feu améliorées.

Dans le contexte de la présente invention, on entend par polymères thermoplastiques et/ou élastomères, tous les polymères appropriés pour la préparation de mousses polymères et qui sont soit uniquement thermoplastiques, soit uniquement élastomères, soit les deux.

En effet, outre les polymères purement thermoplastiques, c'est-à-dire n'ayant pas de propriétés élastomères, d'une part, et les élastomères réticulés non-thermoplastiques sans propriétés thermoplastiques, souvent regroupés d'une manière générique sous le terme « caoutchoucs », d'autre part, il existe des polymères qui sont à la fois thermoplastiques et élastomères, à savoir les polymères dits TPE. Ces derniers sont généralement divisés en six classes génériques disponibles dans le commerce : les copolymères styréniques séquencés, les mélanges de polyoléfines, les alliages élastomères, les polyuréthanes thermoplastiques, les copolyesters thermoplastiques et les polyamides thermoplastiques.

Parmi les polymères thermoplastiques, sont particulièrement préférés les polyoléfines, notamment les homopolymères d'éthylène, p. ex. le LLDPE, le LDPE, le HDPE ; les copolymères de type aléatoires, séquencés, hétérophasiques ou branchés d'éthylène, p. ex. l'EVA, l'EBA, l'EMA ; les homopolymères et copolymères de type aléatoires, séquencés, hétérophasiques ou branchés de propylène, de même que les PE et PP de type métallocène. Ces polyoléfines peuvent soit s'employer individuellement ou en mélange.

Parmi les polymères élastomères, on peut citer le caoutchouc naturel et synthétique (polyisoprène), les polybutadiènes dont les copolymères avec le styrène, l'isobutène ou l'isoprène, les copolymères éthylène-propylène et certains polyuréthanes ou polysiloxanes (silicones) linéaires à chaînes longues.

De préférence, ces (co)polymères élastomères sont choisis parmi le caoutchouc acrylate-butadiène (ABR), les copolymères d'éthyle ou d'autres acrylates et une faible quantité de monomère facilitant la vulcanisation (ACM), les terpolymères d'allylglycidyléther, d'oxyde d'éthylène et d'épichlorhydrine (AECO), les copolymères d'éthyle ou autres acrylates et éthylène (AEM), les terpolymères de tétrafluoroéthylène, trifluoronitrosométhane et nitrosoperfluorobutyrique (AFMU), les copolymères d'éthyle ou autres acrylates et acrylonitrile (ANM), le polyester uréthane (AU), le caoutchouc bromo-isobutène-isoprène (caoutchouc butyle bromé) (BIIR), le caoutchouc butadiène (BR), le polychlorotrifluoroéthylène (CFM), le caoutchouc chloro-isobutène-isoprène (caoutchouc chloré) (CIIR), le polyéthylène chloré (CM), le caoutchouc épichlorhydrine (CO), le caoutchouc chloroprène (CR), le polyéthylène chlorosulfoné (CSM), les copolymères d'oxyde d'éthylène et d'épichlorhydrine (ECO), les copolymères d'éthylène-acétate de vinyle (EAM), les terpolymères d'éthylène, de propylène et un diène avec une portion résiduelle insaturée du diène dans la chaîne latérale (EPDM), les copolymères d'éthylène-propylène (EPM), le polyétheruréthane (EU), le caoutchouc perfluoro de type polyméthylène dans lequel tous les substituants sur la chaîne polymère sont des groupe fluoro, perfluoroalkyle ou perfluoroalkoxy (FFKM), le fluorocaoutchouc de type polyméthylène ayant des substituants fluoro and perfluoroalkoxy groups sur la chaîne principale (FKM), les caoutchouc silicone ayant des substituants fluore, vinyle et méthyle sur la chaîne polymère (FVMQ), le caoutchouc polyoxypropylène (GPO), le caoutchouc isobutène-isoprène (caoutchouc butyle) (IIR), le polyisobutène (IM), le caoutchouc isoprène (synthétique) (IR), le caoutchouc silicone ayant uniquement des substituants méthyles sur la chaîne polymère (MQ), le caoutchouc nitrile-butadiène (caoutchouc nitrile) (NBR), le caoutchouc nitrile-isoprène (NIR), le caoutchouc naturel (NR), le caoutchouc pyridine-butadiène (PBR), le caoutchouc silicone ayant tant des groupes méthyle que phényle sur la chaîne polymère (PMQ), le caoutchouc pyridine-styrène-butadiène (PSBR), le caoutchouc silicone ayant des substituants méthyle, phényle et vinyle sur la chaîne polymère (PVMQ), le caoutchouc ayant du silicium dans la chaîne polymère (Q), le caoutchouc styrène-butadiène (SBR), le caoutchouc ayant du soufre dans la chaîne polymère (sauf copolymères à base de CR) (T), le caoutchouc silicone tant des substituants méthyle que vinyle dans la chaîne polymère (VMQ), le caoutchouc carboxylique-nitrile butadiène (caoutchouc carboxynitrile) (XNBR), le caoutchouc carboxylique-styrène butadiène (XSBR) et le caoutchouc thermoplastique séquencé polyéther-polyester (YBPO). Parmi ceux-ci, on utilise de préférence le caoutchouc acrylonitrile-butadiène (NBR), le caoutchouc éthylène-propylène-diène (EPDM), le caoutchouc styrène-butadiène (SBR) ou le caoutchouc butyle (IIR).

Les polymères élastomères ci-dessus peuvent être utilisés seuls, en mélange avec d'autres polymères élastomères et/ou des polymères thermoplastiques, par exemple le caoutchouc acrylonitrile-butadiène (NBR) en mélange avec le polychlorure de vinyle (PVC).

La réticulation permet d'améliorer les mousses sur de nombreux points quant à leurs propriétés mécaniques, p.ex. afin d'obtenir des structures cellulaires plus fines. Si la réticulation est généralement obligatoire pour les polymères du groupe des « caoutchoucs », elle peut être avantageusement être également appliquée dans le cas des polymères thermoplastiques. Même si, à strictement parler, ces derniers ne sont alors plus thermoplastiques, ils seront néanmoins considérés pour des raisons de facilité comme étant des polymères thermoplastiques dans le contexte de la présente invention.

Par conséquent, les polymères ci-dessus, en particulier les caoutchoucs, comportent de préférence un système de réticulation (système de vulcanisation) comprenant un (ou plusieurs) agent(s) de réticulation pris dans l'ensemble des agents de réticulation formé par le soufre, les peroxydes organiques, les oxydes métalliques, les résines et autres produits vulcanisants, ainsi que le cas échéant des co-agents de réticulation, notamment des activateurs et des accélérateurs de vulcanisation. En pratique, le mélange selon l'invention peut comprendre entre 0 et 10 % en poids du mélange, de préférence entre 1 et 6 % en poids, d'agent de vulcanisation, et, le cas échéant, entre 0 et 5 % en poids d'auxiliaires (co-agents) de vulcanisation, par exemple des activateurs de vulcanisation (p. ex. oxyde de zinc), des accélérateurs de vulcanisation (p. ex. des accélérateurs de type mercapto, sulfénamide, thiuram, guanidine, dithiocarbamate, amine), des retardateurs de vulcanisation (p. ex. à base d'anhydride phtalique, de N-cyclohexylthiophtalimide), etc.

Les nanotubes de carbone (NTC) ont une structure cristalline particulière, de forme tubulaire, creuse, close ou ouverte, composée d'atomes disposés régulièrement en pentagones, hexagones et/ou heptagones. Conviennent dans le cadre de l'invention en principe tous les types de nanotubes de carbone, notamment les nanotubes de carbone monofeuillet et les nanotubes de carbone multifeuillets, de diamètre compris entre 2 à 30 nm, de longueur comprises entre quelques centaines de nm à plusieurs micromètres, dont la surface peut être couverte ou non de groupements fonctionnels (alcools, amines, acides carboxyliques, ...). Des exemples de NTC utilisables sont p. ex. le NANOCYL® - NC 7000 produit et fourni par la société Nanocyl, Belgique, ou encore les FIBRIL® nanotubes par Hyperion, USA.

La quantité en nanotubes de carbone se situe en général dans une gamme comprise entre 0,05 à 10 % en poids, de préférence de 0,5 à 5 % en poids du mélange.

Le phosphore rouge au sens de la présente invention désigne les diverses variétés allotropiques colorées du phosphore (phosphore rouge, violet ou noir) commercialisées sous l'appellation de phosphore rouge.

La quantité de phosphore rouge dans le mélange est généralement comprise entre 0,05 et 15 % en poids par rapport au poids total du mélange; de préférence cette quantité est comprise entre 0,5 et 10 % en poids. D'une manière générale, il est souhaitable d'utiliser le phosphore rouge sous forme finement divisée, par exemple sous forme de particules d'un diamètre moyen n'excédant pas 200 µm et de préférence compris entre 5 et 50 µm. Parmi les types de phosphore rouge utilisables dans le cadre de la présente invention, on peut citer l'EXOLIT RP 692 (CLARIANT), le Masteret 15460 B₂XF ou Masteret 10460 B₂XF de Italmatch ...

Dans une forme avantageuse de l'invention, ledit mélange peut en outre contenir jusqu'à 10 % en poids de nanoargile(s), de préférence de 0.1 à 6 % en poids et en particulier de 1 à 5 % en poids. Il est également souhaitable d'utiliser les nanoargiles sous forme finement divisée, par exemple sous forme de particules d'un diamètre moyen n'excédant pas 30 µm et de préférence compris entre 0.1 et 10 µm. Des exemples de nanoargiles appropriées sont la CLOISITE 20A (Southern Clay Products, USA), BENTONE 2106 (Elementis Specialties, Scotland), ...

Le choix de l'agent de moussage n'est pas critique. En principe, tous les agents de moussage utilisés traditionnellement pour le moussage de polymères thermoplastiques ou élastomères peuvent également l'être dans le cadre de la présente invention, comme les agents de moussage chimiques, comme l'azobisiso-butyronitrile, l'azodicarbonamide, la dinitroso-pentaméthylène-tétramine, le 4,4'-oxybis(benzènesulfonylhydrazide), le diphénylsulfone-3,3'-disulfohydrazide, le benzène-1,3-disulfohydrazide, le p-toluènesulfonylsemi-carbazide ; ou physiques, en particulier les gaz de moussage, comme l'isobutane, l'azote ou le CO₂, le cas échéant sous forme supercritique, selon tous les modes de mise en oeuvre bien connus de l'art antérieur comprenant, selon les cas, des opérations d'extrusion et/ou maintien sous pression puis détente et/ou chauffage, etc. Avantageusement, on utilise de l'isobutane seul ou en mélange avec un autre agent de moussage, p. ex. pour le moussage de polyoléfines.

Dans la préparation de mousse polymère réticulée, le début du moussage peut avoir lieu dans un état déjà partiellement réticulé du (des) polymère(s). Cette mesure permet p. ex. d'augmenter la viscosité de la composition ou même de conditionner la régularité et la finesse de la structure cellulaire finalement obtenue. Dans ce cas, la réticulation se poursuit pendant le moussage et, éventuellement, après.

Néanmoins, la réticulation peut être aussi commencée pendant, ou même après le moussage (notamment dans l'association d'un agent d'expansion physique, c'est-à-dire actif sous l'effet d'une détente, tel que l'isobutane, et d'un agent de réticulation silane).

Les mousses expansées par injection directe en extrusion de gaz différents de l'air ou de l'azote peuvent avantageusement contenir des agents de stabilisation ou stabilisateurs de volume (également appelés modificateurs de la perméation), par exemple de 0 à 10 % en poids d'un ou de plusieurs stabilisateurs de volume, comme p. ex. les amides d'acides gras à chaîne saturée, notamment la stéaramide, palmitamide, ... ; les esters partiels d'acides gras à chaîne saturée et de polyol, notamment l'alpha monostéarate de glycérol, etc.

Les mousses obtenues comportent de préférence essentiellement des cellules fermées et ont d'une manière générale une densité inférieure à 500 kg/m³, de préférence inférieure à 250 kg/m³ et en particulier de 10 à 100 kg/m³.

D'autres additifs pouvant être communément employés sont notamment des additifs antistatiques, des agents anti-UV, des antioxydants, des pigments, des agents pour contrôler et/ou régulariser la structure cellulaire pour améliorer la qualité de la mousse: nucléants pour rendre les cellules plus fines (p.ex. du talc, du carbonate de calcium, de la silice finement précipitée,...) ou dénucléants pour augmenter la taille des cellules (cires de polyéthylène oxydée, cires de candelilla,...) et/ou des agents absorbant, réfléchissant ou diffractant les rayons infrarouges pour une amélioration de l'isolation thermique (p.ex. des particules de métaux ou d'oxyde métalliques, de mica, de dioxyde de titane, de graphite, de noirs de carbone, de kaolin, ... ). Plus spécifiquement pour les mousses d'élastomères réticulés (vulcanisation), les additifs habituellement employés ont entre autres les fonctions suivantes : anti-ozonants, agents anti-feu, pigments, antioxydants, anti-UV, lubrifiants, plastifiants, charges, mattifiants, antistatiques, stabilisateurs thermiques, agents anti-adhésion, agents de vulcanisation, retardateurs de vulcanisation, accélérateurs de vulcanisation, agents d'expansion, activateurs pour les agents d'expansions, ...

Une utilisation particulièrement intéressante de ces mousses polymères ignifuges est l'usage en tant que matériau isolant, protecteur, amortisseur, et/ou décoratif, sous forme de panneaux ou de plaques, de tubes ou de gaines, de profilés, etc., seules ou comme partie d'un matériau composite.

L'invention concerne également un procédé de fabrication d'une mousse polymère ignifuge comportant un ou plusieurs homopolymères, copolymères statistiques et/ou copolymères séquencés, thermoplastiques et/ou élastomères, ou leurs mélanges, 0,05 à 10 %, de préférence de 0,5 à 5 % en poids de nanotubes de carbone et 0,05 à 15 %, de préférence de 0,5 à 10 % en poids de phosphore rouge, et éventuellement jusqu'à 10 % en poids de nanoargile, par rapport au poids total du mélange, prémélangés en partie ou dosés individuellement, sont mélangés et le mélange ainsi obtenu est expansé en présence d'un agent de moussage, afin d'obtenir une mousse.

En particulier, l'invention concerne un procédé de fabrication de mousse, comprenant les étapes suivantes:
a. dosage et mélange d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement ;
b. plastification du mélange résultant par chauffage à haute température et mélangeage pour fondre entièrement la masse et l'homogénéiser ;
c. extrusion à travers une filière, contrôlée en température ;
d. déclenchement du moussage qui entraîne la formation des bulles de gaz, provoquant la formation de la mousse ;
e. le cas échéant, refroidissement, étirage et guidage de la mousse.

Dans ce procédé, le déclenchement du moussage peut se faire d'une part immédiatement à la sortie de la filière d'extrusion par une chute importante de pression se produisant dès passage à l'air libre dans le cas d'un gaz de moussage injecté à l'étape b. et/ou c. ou dans le cas d'un agent de moussage chimique introduit à l'étape a., b. et/ou c. qui est déjà décomposé à la sortie de la filière. D'autre part, ce déclenchement peut également se faire par activation ultérieure de l'agent de moussage chimique (p. ex. après une période de stockage du mélange non-expansé) par chauffage p. ex. dans un four à une température supérieure à la température de décomposition de l'agent de moussage chimique ou par irradiation (micro-ondes, UV, etc.) ou par tout autre moyen approprié en fonction de la nature de l'agent de moussage chimique dans le cas d'un agent de moussage chimique introduit à l'étape a., b. et/ou c. mais qui n'est pas encore décomposé à la sortie de la filière.

En fait, lorsqu'un agent de moussage chimique est déjà activé avant la sortie de la filière d'extrusion, il se décompose de manière à produire un gaz qui reste en solution à la pression régnant dans l'extrudeuse et se comporte donc de la même manière qu'un agent de moussage physique (gaz de moussage), qui se dilate dès que la pression chute en dessous d'une certaine valeur à la sortie de la filière (l'extrusion se faisant généralement à l'air libre).

En particulier, l'invention concerne, dans une première variante, un procédé de fabrication de mousse par extrusion avec injection directe de gaz de moussage. Un tel procédé comprend les étapes suivantes:
a.1. dosage d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement, à l'alimentation d'une extrudeuse, p. ex. à simple vis, double vis co-rotative ou contre-rotative ;
b.1.1. plastification du mélange de polymères et d'additifs par chauffage à haute température du cylindre et mélangeage par la vis pour fondre entièrement la masse et l'homogénéiser ;
b.1.2. injection dans le cylindre d'un gaz de moussage, de préférence à l'endroit où la viscosité du mélange polymères et d'additifs est la plus appropriée ;
b.1.3. homogénéisation de la masse résultante de polymères, d'additifs et de gaz de moussage ;
b.1.4. de préférence, refroidissement de la masse dans les dernières zones plus froides du cylindre, section de refroidissement statique, homogénéisation;
c.1. extrusion à travers une filière, contrôlée en température, ayant une section de forme prédéfinie selon l'application finale de la mousse,
d.1. expansion du gaz de moussage dans la masse subissant une chute importante de pression à la sortie de la filière, ce qui entraîne la formation des bulles de gaz, provoquant la formation de la mousse à l'air libre ;
e.1. le cas échéant, refroidissement, étirage et guidage de la mousse. De préférence, le procédé de fabrication de mousse ci-dessus comprend les étapes suivantes:
a.1. dosage d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement, à l'alimentation d'une extrudeuse ;
b.1.1. plastification du mélange résultant par chauffage à haute température du cylindre et mélangeage pour fondre entièrement la masse et l'homogénéiser ;
b.1.2. injection dans l'extrudeuse d'un gaz de moussage ;
b.1.3. homogénéisation du mélange résultant ;
b.1.4. refroidissement partiel du mélange et homogénéisation ;
c.1. extrusion à travers une filière, contrôlée en température,
d.1. expansion du gaz de moussage dans le mélange subissant une chute importante de pression à la sortie de la filière entraînant la formation de bulles de gaz et la formation d'une mousse à l'air libre ;
e.1. le cas échéant, refroidissement, étirage et guidage de la mousse.

Dans une deuxième variante, l'étape d'injection de l'agent de moussage physique (gaz de moussage) peut être remplacée par l'introduction d'un agent de moussage chimique pendant l'étape a., b. et/ou même c. Par conséquent, l'invention concerne également un procédé de fabrication de mousse utilisant un agent de moussage chimique, comprenant les étapes suivantes:
a.2. dosage d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement, à l'alimentation d'un mélangeur ;
b.2. plastification du mélange résultant par chauffage à haute température du cylindre et mélangeage pour fondre entièrement la masse et l'homogénéiser ; introduction d'au moins un agent de moussage chimique à l'étape a.2., b.2. et/ou même pendant c.2. ;
c.2. extrusion à travers une filière, contrôlée en température, éventuellement refroidissement et stockage du mélange non-expansé,
d.2. déclenchement du moussage par chauffage du mélange à une température supérieure à la température de décomposition de l'agent de moussage chimique ou par irradiation qui entraîne la formation des bulles de gaz, provoquant la formation de la mousse ;
e.2. le cas échéant, refroidissement, étirage et guidage de la mousse.

Dans une autre variante du procédé de fabrication de mousse ci-dessus, celui-ci comprend l'introduction à une ou à plusieurs des étapes a. - c. d'un système de réticulation comprenant au moins un agent de réticulation et, éventuellement un ou plusieurs co-agents de réticulation, tels que ceux décrits ci-dessus.

De préférence, les nanotubes de carbone et éventuellement le phosphore rouge, le cas échéant aussi les nanoargiles peuvent être prémélangés, individuellement ou ensemble, à une partie du polymère avant l'étape a. ci-dessus afin d'améliorer ou d'accélérer leur mélange à l'étape a. Un tel prémélange (encore appelé masterbatch ou mélange-maître) peut également concerner une partie ou la totalité des autres additifs envisagés.

Les températures à utiliser dans le procédé dépendent évidemment de plusieurs facteurs, dont la nature des ingrédients utilisés, le type d'appareillage et le mode de fonctionnement choisis, etc. L'homme de métier dans ce domaine de part son expérience n'aura pas de problèmes à choisir les gammes de température appropriées en fonction des conditions opératoires déterminées.

A titre purement d'illustration dans un procédé par injection directe d'un gaz de moussage (première variante), p.ex. dans le cas d'un LDPE, la température du cylindre à l'étape b. est choisie de préférence de telle manière que la température dans la masse se situe entre 130 et 180 °C ; la température à l'étape b.1.4. sera alors par exemple de 100 à 140 °C, en fonction de la température choisie à l'étape b.1.1. La température d'extrusion à l'étape c.1. est importante pour la formation et la stabilité de la mousse produite et sera dans un tel cas contrôlée de manière à avoir une température plus basse, par exemple de 90 à 120 °C, en fonction de nouveau de la température à l'étape b.1.4. La mousse extrudée peut être guidée, par une étireuse pratiquement sans tension, dans une section de refroidissement (air ou eau ou les deux) pour figer la structure désirée.

En particulier, dans une forme de réalisation préférée de la deuxième variante du procédé, l'invention concerne également un procédé de fabrication de mousse par extrusion d'une matrice non expansée (étapes a.2. - c.2.), puis passage de cette matrice dans une section ultérieure de traitement thermique (étape d.2.), continu ou discontinu, provoquant la réticulation et l'expansion.

Un tel procédé comprend de préférence les étapes types suivantes (l'étape de préparation d'un mélange-maître de matières premières décrit ici plus particulièrement en rapport avec la deuxième variante s'appliquant également à la première variante du procédé):

**Préparation d'un mélange-maître de matières premières**

Cette étape du procédé peut s'effectuer de diverses manières:
➢ soit discontinue, on procède par lots définis de matières;
➢ soit continue.

Les matières premières peuvent de présenter sous diverses formes: solide (granules, billes, poudres, ...) ou liquide;

Les types et fonctions des matières sont variés, on peut citer entre autres les catégories suivantes:
➢ résine(s) élastomère(s)
➢ charges minérales
➢ plastifiants
➢ lubrifiants
➢ retardateurs de flamme
➢ couleurs
➢ antioxydants
➢ antiozonants
➢ agents de moussage chimique
➢ agents de vulcanisation
➢ accélérateurs/retardateurs de vulcanisation
➢ additifs d'aide au process
➢ etc.

Dans le cas de la fabrication du mélange-maître des matières de manière discontinue, on procède par exemple selon la séquence suivante:

Un lot défini d'une partie ou de toutes les matières premières est acheminé vers un malaxeur ("mélangeur interne") chargé de disperser et d'agglomérer en une pâte les divers composants;

Les agglomérats de pâte venant du malaxeur sont déversés dans un mélangeur, par exemple de type à rouleaux contre-rotatifs. Cet appareil doit réaliser l'homogénéisation des matières, via le contrôle de la température, la vitesse de rotation, le temps de mélangeage. La vitesse de rotation pourra être adaptée selon l'ordre et la nature des composants lors des ajouts successifs. On obtient à l'issue du cycle de mélange des bandes de matières homogénéisées.

Si on a ajouté une partie seulement des matières premières, on fait alors repasser les bandes issues de l'étape b) dans le malaxeur, en y ajoutant les composants supplémentaires, et cela en plusieurs sous-séquences si nécessaire. Un contrôle intermédiaire de la viscosité en fonction de la température peut être effectué sur les bandes de mélange partiels, celles-ci étant éventuellement stockées entre deux sous-séquences de mélangeage.

Dans tous les cas, les paramètres doivent être adaptés afin de ne pas démarrer la vulcanisation, ni d'activer la décomposition de l'agent de moussage lors de l'ajout de ces composés.

Lorsque toutes les matières ont été ajoutées, on extrait le mélange-maître des rouleaux du mélangeur, sous forme de bandes de matière.

Après évaluation et validation de la charge de mélange-maître (suivi en laboratoire de la variation de viscosité durant la vulcanisation, provoquée par une élévation de température), les bandes du mélange-maître sont stockées - un temps limité vu la présence des réactifs sensibles à la température - en vue de l'étape d'extrusion.

On peut également fabriquer le mélange-maître en continu, en alimentant une extrudeuse avec toutes les matières, en un ou plusieurs point d'entrée - pour solide et/ou liquides - répartis le long du cylindre. On peut obtenir le mélange-maître par exemple sous la forme pratique de granulés, qui seront stockés en vue de l'étape d'extrusion.

**Extrusion du mélange-maître**

Les bandes ou les granulés du mélange maître de l'étape 1 précédente alimentent une extrudeuse, par exemple à simple ou à double vis (co- ou contre- rotatives), dont le rôle est de mélanger à l'état fondu tous les composants et les mettre en forme à travers une filière;

Selon la filière utilisée, on obtient entre autres une plaque ou un tube creux de matière compacte;

Il faut également éviter de provoquer la vulcanisation du mélange extrudé et/ou la décomposition thermique de l'agent de moussage chimique à ce stade, grâce au contrôle de la température d'extrusion de masse.

**Réticulation - Expansion par traitement thermique**

La matrice ou le profilé compact sortant de l'extrudeuse est ensuite traitée par une élévation de température. Cette étape peut se faire:

de manière continue:
➢ la matrice compacte ou le profilé compact rentre dans un four;
➢ La première partie du four sert à commencer la vulcanisation (=réticulation) des chaînes de la résine élastomère;
➢ la deuxième partie du four provoque la décomposition de l'agent chimique de moussage, qui libère des gaz. Ceux-ci expansent la matière en bulles, dont la taille est régulée par le degré de réticulation des parois de matière environnante et la présence d'additifs formateurs de cellules;
➢ la mousse formée sort du four.

de manière discontinue:
➢ la matrice compacte ou le profilé compact sont découpés en longueurs;
➢ les longueurs sont placées dans un four de volume déterminé;
➢ un programme de température permet la réticulation des chaînes d'élastomères, puis la décomposition de l'agent chimique entraînant l'expansion de la matrice ou du profilé.
➢ la mousse résultante en fin de programme est sortie du four.

**Opérations ultérieures**
➢ Refroidissement (jets d'eau);
➢ séchage (air soufflé sur la mousse);
➢ découpes;
➢ emballage;
➢ stockage.

Comme autre exemple de réalisation de la deuxième variante du procédé (extrusion d'une matrice non expansée (étapes a.2. - c.2.), puis passage de cette matrice dans une section ultérieure de traitement thermique (étape d.2.), continu ou discontinu, provoquant la réticulation et l'expansion), on peut citer la fabrication de mousses de polyoléfines réticulées avec des agents de type peroxydes, des co-agents de réticulations, et expansées par l'utilisation d'agents chimiques d'expansion.

Un tel procédé comprend de préférence les étapes-types suivantes:
1. dosage des composants de la formulation (polymères et additifs, agents et co-agents de réticulation, agents d'expansion) dans une extrudeuse, simple ou double vis (co- ou contre-rotatives), afin de plastifier et homogénéiser la composition, les paramètres étant choisis de manière à ne pas provoquer de manière dommageable ni la réticulation ni la décomposition des agents d'expansion chimiques ;
2. extrusion du mélange au travers d'une filière, sous forme de matrice compacte non expansée, sous forme de plaque ou de tube ou toute autre forme;
3. calandrage éventuel de la matrice compacte, par exemple si en forme de plaque;
4. tirage de la matrice en continu dans un four, dont la première partie sert à provoquer la réticulation partielle du mélange, la deuxième partie ayant pour but tant la décomposition du ou des agents d'expansion chimiques, sous l'effet de la température, que l'achèvement de la réticulation, ces deux processus à un moment concomitants entraînant le moussage de la matrice;
5. tirage sur rouleaux de la feuille expansée, refroidissement, découpe des bords, autres opérations de finition sur la mousse achevée.

L'étape 1 peut être précédée de fabrications d'un nombre de mélanges-maîtres rassemblant certains des composants, par exemple le ou les polymères avec certains additifs, de manière équivalente à celle décrite ci-dessus.

Les équipements utilisés pour la fabrication de mousses polymères ordinaires peuvent être utilisés dans la fabrication de mousses polymères ignifuges selon l'invention.

### Exemples

### 1. Plaques compactes et mousses obtenues par extrusion avec injection directe de gaz

Les tableaux ci-dessous résument les tests feu du type épiradiateur (AFNOR NF P92-505) effectués sur des plaques compactes et sur des mousses. Les résultats présentent le temps nécessaire à l'inflammation d'une plaque de 3x7x7cm³ (TTI), et le nombre de fois que l'échantillon s'est éteint durant les 5 minutes du test (N). Le TTI et le N doivent être grands pour un bon comportement au feu.

### Produits et réactifs :

Les produits et réactifs suivants ont été utilisés pour les tests :
**APP** : ammonium polyphosphate de CLARIANT: EXOLIT AP 422
**Red P** : phosphore rouge de CLARIANT: masterbatch EXOLIT RP 692 concentré à 50% de phosphore rouge dans du polyéthylène basse densité
**OP 1230** : phosphinate de CLARIANT: EXOLIT OP 1230
**NTC** : nanotubes de carbone, de NANOCYL - NC 7000
**CLOISITE 20A** : nanoargile organomodifiée de Southern Clay Products
**OSV 90** = concentré à 90% d'amides d'acide gras ARMID HT (AKZO NOBEL) dans 10% d'EVA
**LDPE**: polyéthylène basse densité de SABIC: 1922T (densité 919 kg/m³, MFI= 22)

### Exemple 1.1 : Plaques compactes:

Les essais comparatifs et suivant l'invention repris ci-après ont été effectués sur des plaques compactes en LDPE contenant les agents ignifuges indiqués aux quantités reprises dans le Tableau 1 ci-dessous.

Tableau 1

| | | TTI (s) | N |
|---|---|---|---|
| 1 (Comp.) | **LDPE** | 67 | 1 |
| 2 (Comp.) | Plaque faite à partir d'une mousse **LDPE** + ignifuge halogéné (Bromé + Sb₂O₃) | 89,5 | 8 |
| 3 (Comp.) | 10% **APP** | 48 | 2,5 |
| 4 (Comp.) | 20% **APP** | 47 | 4 |
| 5(Comp.) | 10% **NTC** | 61,5 | 5 |
| 6 (Comp.) | 3% **NTC** | 105 | 1 |
| 7 (Comp.) | 10% **Red P** | 102 | 13,5 |
| 8 (Comp.) | 10% **CLOISITE 20A** | 52 | 1 |
| 9 (Comp.) | 3% **CLOISITE 20A** | 72 | 1 |
| 10 (Comp.) | 10% **OP 1230** | 63 | 14 |
| 11 (Comp.) | 20% **OP 1230** | 101 | 2 |
| 12 (Comp.) | 7% **APP** + 3% **NTC** | 44,5 | 2,5 |
| 13 (Comp.) | 7% **APP** + 3% **CLOISITE 20A** | 44,5 | 2 |
| 14 | 7% **OP 1230** + 3% **NTC** | 56 | 13,5 |
| 15 (Comp.) | 7% **OP 1230** + 3% **CLOISITE 20A** | 54,5 | 1 |
| 16 | 7% **Red P** + 3% **NTC** | 58 | 21 |
| 17 (Comp.) | 7% **Red P** + 3% **CLOISITE 20A** | 60,5 | 1 |

### Exemple 1.2 : Mousses ignifuges

Les mousses suivantes ont été extrudées selon le procédé de moussage par injection directe de gaz décrit précédemment ; elles comportent un stabilisateur de volume (amides d'acide gras : stéaramide + palmitamide) nécessaire pour éviter un collapse, lorsque les mousses sont gonflées à l'isobutane.

Tableau 2 : Compositions de mousses

| **Composition n°** | | **M72 (comp.)** | | **M73** | | **M74** | |
|---|---|---|---|---|---|---|---|
| Produits | | parts | % en poids | parts | % en poids | parts | % en poids |
| LDPE 2102TX00 (SABIC, LDPE densité 921 kg/m³ -MFI(190°C/2.16kg) =2 | | 85 | 81,7% | 71 | 68,9% | | 0,0% |
| PLASTICYL (Masterbatch 80% LDPE + 20% nanotubes) | | 15 | 14,4% | 15 | 14,6% | 15 | 14,6% |
| Masterbatch 85,5/11,6/2,9 % LDPE/EVA /CLOISITE 20A | | | 0,0% | | 0,0% | 71 | 68,9% |
| EXOLIT RP 692 (MB 50% LDPE + 50% red P) | | | 0,0% | 14 | 13,6% | 14 | 13,6% |
| MB Talc (50% LDPE + 50% talc) | | 1 | 1,0% | | 0,0% | | 0,0% |
| OSV 90 | | 3 | 2,9% | 3 | 2,9% | 3 | 2,9% |
| | | 104 | 100,0% | 103 | 100,0% | 103 | 100,0% |
| | | | | | | | |

| Masterbatch (MB) | % conc. du MB | | % de la composit. | | % de la composit. | | % de la composit. |
|---|---|---|---|---|---|---|---|
| % NTC | 20% | | 2,9% | | 2,9% | | 2,9% |
| % CLOISITE 20A | 3% | | 0,0% | | 0,0% | | 2,0% |
| % Red P | 50% | | 0,0% | | 6,8% | | 6,8% |

Tableau 3 : Résultats des essais de combustion à l'épiradiateur:

| | TTI (s) | N |
|---|---|---|
| Mousse de réf. halogénée 25 kg/m³ | 22 | 3,5 |
| M72 (PEBD/NTC) (comp.) | 5,5 | 1 |
| M73 (PEBD/NTC/Red P) | 10 | 5,5 |
| M74 (PEBD/NTC/Red P/Cloisite) | 10 | 6 |

Les deux dernières compositions indiquent une progression par rapport à la mousse de référence. Une amélioration de leur structure cellulaire et une réduction de la densité des mousses peuvent être obtenues en veillant à une dispersion suffisante des nanotubes NTC, de préférence en les dosant via un masterbatch (MB) p.ex. dans la polyoléfine choisie et en évitant une concentration trop élevée de NTC dans le MB qui provoque une augmentation trop forte de la viscosité de celui-ci.

En effet, lorsqu'on réextrude une première fois le masterbatch (MB) de NTC en un compound, puis en faisant la mousse à partir de ce compound (c'est-à-dire deux extrusions en tout), quelques trous sont encore présents, mais ils sont nettement plus petits, il n'y a pas de grains solides détectables et la densité de la mousse atteint 27 kg/m³.

Par conséquent, en combinant les nanotubes de carbone et le phosphore rouge, éventuellement même des nanoargiles, comme agents ignifuges, on obtient de très bons résultats, surtout en ce qui concerne le caractère autoextincteur de mousses selon l'invention.

Le test feu suivant (mass loss calorimeter, ASTM E2102-04a), fait sur ces mousses, mesure la quantité de chaleur totale (THRR) dégagée lors de la combustion et le maximum de dégagement de chaleur (HRR):

Tableau 4 : Résultats des essais de combustion au cône calorimètre

| Catégorie/version de Mousse | HRR max (kW/m²) | THRR (MJ/m²) | Masse (g) | HRR max/g (kW/g.m²) | THRR/g (MJ/g.m²) |
|---|---|---|---|---|---|
| Mousse LDPE sans antifeu | 199 | 10,94 | 3,6 | 3 | 55,27 |
| Mousse LDPE Halogénée de réf. (voir Tableau 1 ex. 2 (comp) | 189 | 15,16 | 3,11 | 4,87 | 60,77 |
| NTC (M72) | 301 | 24,94 | 6,02 | 4,14 | 50 |
| NTC - Red P (M73) | 288 | 21,6 | 6,75 | 3 | 42 |
| NTC - Red P - Cloisite (M74) | 247 | 18,6 | 6,39 | 2,9 | 38,65 |

Rapporté au poids de mousse, les compositions M72, mais surtout M73 et M74 sont meilleures que la mousse de référence halogénée.

### 2. Plaques ou tubes de mousses élastomères vulcanisées obtenues par extrusion puis expansion par traitement thermique

Les compositions suivantes ont été préparées selon le procédé, décrit précédemment, de mélangeage des polymères et additifs puis extrusion d'une matrice non expansée, et passage de cette matrice dans une section ultérieure de traitement thermique, continu ou discontinu, provoquant la réticulation et l'expansion.

### Exemple 2.1 (référence, non représentative de l'invention): mousse en plaque:

Tableau 5 : Composition de mousse

| **NATURE CHIMIQUE** | **RÔLE** | **% en poids** |
|---|---|---|
| caoutchouc butadiène-nitrile | résine élastomère | 11,55 |
| copolymère de chlorure de vinyle - acétate de vinyle | résine, amélioration résistance huiles et ozone, anti-feu | 7,5 |
| polychlorure de vinyle | résine, amélioration résistance huiles et ozone, anti-feu | 7,5 |
| polyéthylène chlorosulfoné | résistance à l'ozone, oxygène, chaleur, aux produits chimiques; résistance mécanique; aide au process | 3,4 |
| trihydroxyde d'aluminium | anti-feu | 24,1 |
| cire paraffines microcristallines | antiozonant | 1,7 |
| paraffine chlorée C₁₄₋₁₇ | anti-feu | 12,2 |
| noir de carbone | pigment | 2,3 |
| sel de zinc de 4- et 5-méthyl-2-mercapto-benzimidazole | anti-dégradant (O2, O3,...) | 0,1 |
| hexabromocyclododécane | anti-feu | 3,4 |
| trioxyde d'antimoine | anti-feu synergiste | 1,7 |
| talc | charge | 7,4 |
| stéarate de calcium | lubrifiant | 0,1 |
| polyéthylène glycol | mattifiant, antistatique, lubrifiant | 0,6 |
| huile de soja époxydée | stabilisateur d'acides | 0,6 |
| octyl diphényl phosphate | co-retardateur de feu, lubrifiant | 2,3 |
| oxyde de zinc | Accélérateur de vulcanisation, neutralisant d'acide | 0,4 |
| composé de phénylènediamine (6PPD) | antioxydant | 0,3 |
| stéarate de magnésium | agent anti-adhésion | 0,1 |
| zinc-N-dibutyl-dithiocarbamate | Accélérateur de vulcanisation | 0,3 |
| azodicarbonamide | agent chimique d'expansion | 8,7 |
| sel organique de zinc | activateur pour agent d'expansion | 0,65 |
| dispersion de soufre ds élastomère | agent de vulcanisation | 0,4 |
| composé de benzène sulfonamide | retardateur de vulcanisation | 0,2 |
| zinc-diméthyl-dithiocarbamate | Accélérateur de vulcanisation | 1,8 |
| sel de zinc de 2-mercaptobenzothiazole | Accélérateur de vulcanisation | 0,1 |
| dipentaméthylène thiuram tétrasulfure | Accélérateur de vulcanisation | 0,6 |
| TOTAL | | 100,00 |

On a 43.7% en poids d'additifs anti-feu, dont près de 26% sous forme solide.

### Exemple 2.2 (représentatif de l'invention): mousse en plaque:

Tableau 6 : Composition de mousse

| **NATURE CHIMIQUE** | **RÔLE** | **% en poids** |
|---|---|---|
| caoutchouc butadiène-nitrile | résine élastomère | 16.92 |
| copolymère de chlorure de vinyle - acétate de vinyle | résine, amélioration résistance huiles et ozone, anti-feu | 10.98 |
| polychlorure de vinyle | résine, amélioration résistance huiles et ozone, anti-feu | 10.98 |
| polyéthylène chlorosulfoné | résistance à l'ozone, oxygène, chaleur, aux produits chimiques; résistance mécanique; aide au process | 4.97 |
| cire paraffines microcristallines | antiozonant | 2.49 |
| noir de carbone | pigment | 3.37 |
| sel de zinc de 4- et 5-méthyl-2-mercapto-benzimidazole | anti-dégradant (O2, O3,...) | 0,15 |
| trioxyde d'antimoine | anti-feu synergiste | 2.49 |
| talc | charge | 10.85 |
| stéarate de calcium | lubrifiant | 0,15 |
| polyéthylène glycol | mattifiant, antistatique, lubrifiant | 0,88 |
| huile de soja époxydée | stabilisateur d'acides | 0,88 |
| octyl diphényl phosphate | co-retardateur de feu, lubrifiant | 3.37 |
| oxyde de zinc | Accélérateur de vulcanisation, neutralisant d'acide | 0,59 |
| composé de phénylènediamine (6PPD) | antioxydant | 0,44 |
| stéarate de magnésium | agent anti-adhésion | 0,15 |
| zinc-N-dibutyl-dithiocarbamate | Accélérateur de vulcanisation | 0,44 |
| azodicarbonamide | agent chimique d'expansion | 12.74 |
| sel organique de zinc | activateur pour agent d'expansion | 0,95 |
| dispersion de soufre dans élastomère | agent de vulcanisation | 0,59 |
| composé de benzène sulfonamide | retardateur de vulcanisation | 0,29 |
| zinc-diméthyl-dithiocarbamate | Accélérateur de vulcanisation | 2.64 |
| sel de zinc de 2-mercaptobenzothiazole | Accélérateur de vulcanisation | 0,15 |
| dipentaméthylène thiuram tétrasulfure | Accélérateur de vulcanisation | 0,88 |
| Nanotubes de carbone | anti-feu | 2.88 |
| Nanoargiles | anti-feu | 2.03 |
| Phosphore rouge | anti-feu | 6.77 |
| TOTAL | | 100,00 |

On a 17.53% en poids d'additifs anti-feu.

### 3. Plaques ou tubes de mousses polyoléfines réticulées obtenues par extrusion puis expansion par traitement thermique

Les compositions suivantes ont été préparées selon le procédé, décrit précédemment, de mélangeage des polymères et additifs puis extrusion d'une matrice non expansée en forme de plaque, et passage de cette matrice dans une section ultérieure de traitement thermique - ici en continu, provoquant sa réticulation et l'expansion.

Tableau 7 : Compositions de mousse

| | | **référence (non représentative de l'invention)** | **composition représentative de l'invention** |
|---|---|---|---|
| **NATURE CHIMIQUE** | **RÔLE** | **% en poids** | **% en poids** |
| Polyéthylène basse densité (LDPE) | résine polyoléfine | 59,99% | 66,07% |
| Azodicarbonamide | agent chimique d'expansion | 15,42% | 16,99% |
| Mélange-maître à 40% en poids de dicumyl peroxyde | agent de réticulation | 1,52% | 1,67% |
| noir de carbone | pigment | 0,47% | 0,52% |
| Mélange-maître à 80% en poids d'anti-feu bromé + trioxyde d'antimoine 2/1 | anti-feu halogéné + synergiste | 19,93% | 0,00% |
| Mélange-maître à 40% en poids de plaquettes d'aluminium | pigment réflecteur d'infrarouges | 2,66% | 2,93% |
| Nanotubes de carbone | anti-feu | 0,00% | 2,97% |
| Phosphore rouge | anti-feu | 0,00% | 6,61% |
| Nanoargiles | anti-feu | 0,00% | 2,25% |
| TOTAUX | | 100% | 100% |

## Revendications

1. Mousse polymère ignifuge à base d'un mélange comprenant
a. une composition polymère comprenant un ou plusieurs homopolymères, copolymères, séquencés ou aléatoires, thermoplastiques et/ou élastomères, ou leurs mélanges, éventuellement réticulé(s),
b. de 0,05 à 10 %, de préférence de 0,5 à 5 % en poids de nanotubes de carbone, et
c. de 0,05 à 15 %, de préférence de 0,5 à 10 % en poids de phosphore rouge,
par rapport au poids total du mélange.

2. Mousse selon la revendication 1, comprenant en outre jusqu'à 10 % en poids de nanoargile(s), de préférence de 0,1 à 6 % en poids et en particulier de 1 à 5 % en poids.

3. Mousse selon la revendication 1 ou 2, ayant une densité inférieure à 500 kg/m³, de préférence inférieure à 250 kg/m³ et en particulier de 10 à 100 kg/m³.

4. Mousse selon l'une quelconque des revendications précédentes, **caractérisée en ce qu'**elle comprend en outre de 0 à 10 % en poids d'un ou de plusieurs stabilisateurs de volume.

5. Mousse selon l'une quelconque des revendications précédentes, **caractérisée en ce qu'**elle comprend en outre des additifs antistatiques, des agents anti-UV, des antioxydants, des pigments et/ou des agents de nucléation.

6. Mousse selon l'une quelconque des revendications précédentes, **caractérisée en ce qu'**elle comporte essentiellement des cellules fermées.

7. Utilisation de la mousse selon l'une quelconque des revendications précédentes comme matériau isolant, protecteur, amortisseur et/ou décoratif pour la fabrication de panneaux, de tubes, de profilés, etc.

8. Procédé de fabrication d'une mousse polymère ignifuge, **caractérisé en ce qu'**un ou plusieurs homopolymères, copolymères, séquencés ou aléatoires, thermoplastiques et/ou élastomères, ou leurs mélanges, prémélangés ou dosés individuellement, est/sont mélangé(s) à 0,05 à 10 %, de préférence de 0,5 à 5 % en poids de nanotubes de carbone et de 0,05 à 15 %, de préférence de 0,5 à 10 % en poids de phosphore rouge, et éventuellement jusqu'à 10 % en poids de nanoargile(s), par rapport au poids total du mélange, et **en ce qu'**on expanse le mélange ainsi obtenu en présence d'un agent de moussage afin d'obtenir une mousse.

9. Procédé de fabrication de mousse selon la revendication 8, comprenant les étapes suivantes:
a. dosage et mélange d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement ;
b. plastification du mélange résultant par chauffage à haute température et mélangeage pour fondre entièrement la masse et l'homogénéiser ;
c. extrusion à travers une filière, contrôlée en température,
d. déclenchement du moussage qui entraîne la formation des bulles de gaz, provoquant la formation de la mousse
e. le cas échéant, refroidissement, étirage et guidage de la mousse. dans lequel le déclenchement du moussage se fait soit à la sortie de la filière par une chute importante de pression dans le cas d'un gaz de moussage injecté à l'étape b. et/ou c. ou dans le cas d'un agent de moussage chimique introduit à l'étape a., b. et/ou c. qui est déjà décomposé à la sortie de la filière, soit par activation de l'agent de moussage chimique par chauffage à une température supérieure à la température de décomposition de l'agent de moussage chimique ou par irradiation dans le cas d'un agent de moussage chimique introduit à l'étape a., b. et/ou c. qui n'est pas encore décomposé à la sortie de la filière.

10. Procédé de fabrication de mousse selon la revendication 8 ou 9, comprenant les étapes suivantes:
a.1. dosage d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement, à l'alimentation d'une extrudeuse ;
b.1.1. plastification du mélange résultant par chauffage à haute température du cylindre et mélangeage pour fondre entièrement la masse et l'homogénéiser ;
b.1.2. injection dans l'extrudeuse d'un gaz de moussage ;
b.1.3. homogénéisation du mélange résultant ;
b.1.4. refroidissement partiel du mélange et homogénéisation ;
c.1. extrusion à travers une filière, contrôlée en température,
d.1. expansion du gaz de moussage dans le mélange subissant une chute importante de pression à la sortie de la filière entraînant la formation de bulles de gaz et la formation d'une mousse à l'air libre ;
e.1. le cas échéant, refroidissement, étirage et guidage de la mousse.

11. Procédé de fabrication de mousse selon la revendication 8 ou 9, comprenant les étapes suivantes:
a.2. dosage d'un ou de plusieurs homopolymères, copolymères, séquencés ou aléatoires, thermoplastiques et/ou élastomères, ou de leurs mélanges, de nanotubes de carbone et de phosphore rouge et éventuellement d'autres additifs, prémélangés ou dosés individuellement, à l'alimentation d'un mélangeur ;
b.2. plastification du mélange résultant par chauffage à haute température du cylindre et mélangeage pour fondre entièrement la masse et l'homogénéiser ;
introduction d'au moins un agent de moussage chimique à l'étape a.2. et/ou b.2. ;
c.2. extrusion à travers une filière, contrôlée en température, éventuellement refroidissement et stockage du mélange non-expansé,
d.2. déclenchement du moussage par un chauffage du mélange à une température supérieure à la température de décomposition de l'agent de moussage chimique ou par irradiation entraînant la formation des bulles de gaz et provoquant la formation de la mousse ;
e.2. le cas échéant, refroidissement, étirage et guidage de la mousse.

12. Procédé de fabrication de mousse selon l'une quelconque des revendications 8 à 11, comprenant l'introduction à une ou plusieurs des étapes a., b. et/ou c. d'un système de réticulation comprenant au moins un agent de réticulation et, éventuellement un ou plusieurs co-agents de réticulation.

## Claims

1. A flame-retardant polymeric foam based on a mixture comprising
a. a polymer composition comprising one or more homopolymers, random copolymers or block copolymers, which are thermoplastic and/or elastomeric, or mixtures thereof, optionally crosslinked,
b. from 0.05 to 10%, preferably from 0.5% to 5%, by weight of carbon nanotubes, and
c. from 0.05 to 15%, preferably from 0.5% to 10%, by weight of red phosphorus, relative to the total weight of the mixture.

2. The foam as claimed in claim 1, **characterized in that** it further comprises up to 10% by weight of nanoclay(s), preferably from 0.1% to 6% by weight and in particular from 1 % to 5% by weight.

3. The foam as claimed in claim 1 or 2, with a density of less than 500 kg/m³, preferably less than 250 kg/m³ and in particular from 10 to 100 kg/m³.

4. The foam as claimed in any one of the preceding claims, **characterized in that** it further comprises from 0 to 10% by weight of one or more volume stabilizers.

5. The foam as claimed in any one of the preceding claims, **characterized in that** it further comprises antistatic additives, UV stabilizers, antioxidants, pigments and/or nucleating agents.

6. The foam as claimed in any one of the preceding claims, characterized it essentially comprises closed cells.

7. Use of the foam as claimed in any one of the preceding claims as an insulating, protective, shock-absorbing and/or decorative material for the manufacture of panels, tubes, profiles, etc.

8. A process for manufacturing a flame-retardant polymeric foam, **characterized in that** one or more homopolymers, block or random copolymers, which are thermoplastic and/or elastomeric, or mixtures thereof, premixed or individually metered out, is (are) mixed with 0.05 to 10% and preferably from 0.5 to 5% by weight of carbon nanotubes and from 0.05 to 15% and preferably from 0.5 to 10% by weight of red phosphorus, and optionally up to 10% by weight of nanoclay(s), relative to the total weight of the mixture, and **in that** the mixture thus obtained is expanded in the presence of a foaming agent so as to obtain a foam.

9. The foam manufacturing process as claimed in claim 8, comprising the following steps:
a. metering out and mixing of one or more homopolymers, block or random copolymers, which are thermoplastic and/or elastomeric, or mixtures thereof, carbon nanotubes and red phosphorus and optionally other additives, premixed or individually metered out;
b. plasticization of the resulting mixture by heating to high temperature and mixing to entirely melt the mass and homogenize it;
c. extrusion through a temperature-controlled die,
d. initiation of foaming, which leads to the formation of gas bubbles, causing formation of the foam,
e. where appropriate, cooling, drawing and guiding of the foam,
in which the initiation of foaming takes place either on exiting the die by means of a large drop in pressure in the case of a foaming gas injected in step b. and/or c. or in the case of a chemical foaming agent introduced in step a., b. and/or c. that is already decomposed on exiting the die, or by means of activation of the chemical foaming agent by heating to a temperature above the decomposition temperature of the chemical foaming agent or by irradiation in the case of a chemical foaming agent introduced in step a., b. and/or c. which is not yet decomposed on exiting the die.

10. The foam manufacturing process as claimed in claim 8 or 9, comprising the following steps:
a.1. metering out of one or more homopolymers, block or random copolymers, which are thermoplastic and/or elastomeric, or mixtures thereof, carbon nanotubes and red phosphorus and optionally other additives, premixed or individually metered out, fed into an extruder;
b.1.1. plasticization of the resulting mixture by heating to high temperature of the cylinder and mixing to fully melt the mass and homogenize it;
b.1.2. injection of a foaming gas into the extruder
b.1.3. homogenization of the resulting mixture;
b.1.4. partial cooling of the mixture and homogenization;
c.1. extrusion through a temperature-controlled die,
d.1. expansion of the foaming gas in the mass undergoing a substantial drop in pressure on exiting the die, which brings about the formation of gas bubbles, causing the formation of foam in open air;
e.1. where appropriate, cooling, drawing and guiding of the foam.

11. The foam manufacturing process as claimed in claim 8 or 9, comprising the following steps:
a.2. metering out of one or more homopolymers, block or random copolymers, which are thermoplastic and/or elastomeric, or mixtures thereof, carbon nanotubes and red phosphorus and optionally other additives, premixed or individually metered out, fed into a mixer;
b.2. plasticization of the resulting mixture by heating to high temperature of the cylinder and mixing to fully melt the mass and homogenize it;
introduction of at least one chemical foaming agent into step a.2. and/or b.2;
c.2. extrusion through a temperature-controlled die, optionally cooling and storage of the nonexpanded mixture,
d.2. initiation of foaming by heating the mixture to a temperature above the decomposition temperature of the chemical foaming agent or by irradiation, which leads to the formation of gas bubbles, causing the formation of the foam;
e.2. where appropriate, cooling, drawing and guiding of the foam.

12. The foam manufacturing process as claimed in any one of claims 8 to 11, comprising the introduction into one or more of the steps a., b. and/or c. of a crosslinking system comprising at least one crosslinking agent, and optionally one or more crosslinking coagents.

## Patentansprüche

1. Flammhemmender Polymerschaum auf Basis eines Gemischs, das Folgendes umfasst:
a. eine Polymerzusammensetzung, die ein oder mehrere thermoplastische und/oder elastomerische Homopolymere, Blockcopolymere oder statistische Copolymere oder deren Gemische, gegebenenfalls vernetzt, umfasst,
b. 0,05 bis 10 Gew.-%, vorzugsweise 0,5 bis 5 Gew.-% Kohlenstoffnanoröhrchen und
c. 0,05 bis 15 Gew.-%, vorzugsweise 0,5 bis 10 Gew.-% Rotphosphor,
bezogen auf das Gesamtgewicht des Gemischs.

2. Schaum nach Anspruch 1, der außerdem bis zu 10 Gew.-% Nanoclay(s) umfasst, vorzugsweise 0,1 bis 6 Gew.-% und insbesondere 1 bis 5 Gew.-%.

3. Schaum nach Anspruch 1 oder 2, der eine Dichte von weniger als 500 kg/m³, vorzugsweise weniger als 250 kg/m³ und insbesondere 10 bis 100 kg/m³ aufweist.

4. Schaum nach einem der vorhergehenden Ansprüche, **dadurch gekennzeichnet, dass** er außerdem 0 bis 10 Gew.-% eines oder mehrerer Volumenstabilisatoren umfasst.

5. Schaum nach einem der vorhergehenden Ansprüche, **dadurch gekennzeichnet, dass** er außerdem antistatische Additive, UV-Schutzmittel. Antioxidationsmittel, Pigmente und/oder Nukleierungsmittel umfasst.

6. Schaum nach einem der vorhergehenden Ansprüche, **dadurch gekennzeichnet, dass** er im Wesentlichen geschlossene Zellen umfasst.

7. Verwendung des Schaums nach einem der vorhergehenden Ansprüche als Isolier-, Schutz-, Dämpfungs- und/oder Dekorationsmittel zur Herstellung von Platten, Rohren, Profilen usw.

8. Verfahren zur Herstellung eines flammhemmenden Polymerschaums, **dadurch gekennzeichnet, dass** ein oder mehrere thermoplastische und/oder elastomerische Homopolymere, Blockcopolymere oder statistische Copolymere oder deren Gemische, vorgemischt oder einzeln dosiert, mit 0,05 bis 10 Gew.-%, vorzugsweise 0,5 bis 5 Gew.-% Kohlenstoffnanoröhrchen und 0,05 bis 15 Gew.-%, vorzugsweise 0,5 bis 10 Gew,-% Rotphosphor und gegebenenfalls bis zu 10 Gew,-% Nanoclay(s), bezogen auf das Gesamtgewicht des Gemischs, gemischt werden und dass das so erhaltene Gemisch in Gegenwart eines Schäummittels geschäumt wird, um einen Schaum zu erhalten.

9. Verfahren zur Herstellung des Schaums nach Anspruch 8, das die folgenden Schritte umfasst:
a. Dosieren und Mischen von einem oder mehreren thermoplastischen und/oder elastomerischen Homopolymeren, Blockcopolymeren oder statistischen Copolymeren oder deren Gemischen, Kohlenstoffnanoröhrchen und Rotphosphor und gegebenenfalls anderen Additiven, vorgemischt oder einzeln dosiert;
b. Plastifizieren des resultierenden Gemischs durch Erhitzen auf eine hohe Temperatur und Mischen, um die Masse vollständig aufzuschmelzen und sie zu homogenisieren;
c. Extrudieren durch eine Düse, die temperaturgeregelt ist,
d. Auslösen des Schäumens, was das Bilden von Gasblasen nach sich zieht, wodurch das Bilden des Schaums bewirkt wird,
e. gegebenenfalls Kühlen, Verstrecken und Führen des Schaums,
in dem das Auslösen des Schäumens entweder am Austritt der Düse durch einen beträchtlichen Druckabfall im Fall eines Schäumgases, das in Schritt b. und/oder c. eingespritzt wird, oder im Fall eines chemischen Schäummittels, das in Schritt a., b. und/oder c. eingebracht wird, das sich bereits am Austritt der Düse zersetzt hat, oder durch Aktivierung des chemischen Schäummittels durch Erhitzen auf eine Temperatur, die über der Zersetzungstemperatur des chemischen Schäummittels liegt, oder durch Bestrahlen im Fall eines chemischen Schäummittels, das in Schritt a., b. und/oder c. eingebracht wird, das sich nicht bereits am Austritt der Düse zersetzt hat, durchgeführt wird.

10. Verfahren zur Herstellung des Schaums nach Anspruch 8 oder 9, das die folgenden Schritte umfasst:
a.1. Dosieren von einem oder mehreren thermoplastischen und/oder elastomerischen Homopolymeren, Blockcopolymeren oder statistischen Copolymeren oder deren Gemischen, Kohlenstoffnanoröhrchen und Rotphosphor und gegebenenfalls anderen Additiven, vorgemischt oder einzeln dosiert, zum Speisen eines Extruders;
b.1.1. Plastifizieren des resultierenden Gemischs durch Erhitzen des Zylinders auf eine hohe Temperatur und Mischen, um die Masse vollständig aufzuschmelzen und sie zu homogenisieren;
b.1.2. Einspritzen eines Schäumgases in den Extruder;
b.1.3. Homogenisieren des resultierenden Gemischs;
b.1.4. partielles Abkühlen des Gemischs und Homogenisieren;
c.1. Extrudieren durch eine Düse, die temperaturgeregelt ist,
d.1. Ausdehnen des Schäumgases in dem Gemisch, das einem beträchtlichen Druckabfall am Austritt der Düse unterworfen wird, was das Bilden von Gasblasen und das Bilden des Schaums an der freien Luft nach sich zieht;
e.1. gegebenenfalls Kühlen, Verstrecken und Führen des Schaums.

11. Verfahren zur Herstellung des Schaums nach Anspruch 8 oder 9, das die folgenden Schritte umfasst:
a.2. Dosieren von einem oder mehreren thermoplastischen und/oder elastomerischen Homopolymeren, Blockcopolymeren oder statistischen Copolymeren oder deren Gemischen, Kohlenstoffnanoröhrchen und Rotphosphor und gegebenenfalls anderen Additiven, vorgemischt oder einzeln dosiert, zum Speisen eines Mischers;
b.2. Plastifizieren des resultierenden Gemischs durch Erhitzen des Zylinders auf eine hohe Temperatur und Mischen, um die Masse vollständig aufzuschmelzen und sie zu homogenisieren;
Einbringen mindestens eines chemischen Schäummittels in Schritt a.2. und/oder b.2.;
c.2. Extrudieren durch eine Düse, die temperaturgeregelt ist, gegebenenfalls Kühlen und Lagern des nicht geschäumten Gemischs,
d.2. Auslösen des Schäumens durch Erhitzen auf eine Temperatur, die über der Zersetzungstemperatur des chemischen Schäummittels liegt, oder durch Bestrahlen, was das Bilden von Gasblasen nach sich zieht und wodurch das Bilden des Schaums bewirkt wird;
e.2. gegebenenfalls Kühlen, Verstrecken und Führen des Schaums.

12. Verfahren zur Herstellung des Schaums nach einem der Ansprüche 8 bis 11, das das Einbringen eines Vernetzungssystems in einen oder mehrere der Schritte a., b. und/oder c. umfasst, wobei das Vernetzungssystem mindestens ein Vernetzungsmittel und gegebenenfalls ein oder mehrere Covernetzungsmittel umfasst.
